# EUROPÄISCHE PATENTSCHRIFT

(11) **EP 2 947 031 B1**
(45) Veröffentlichungstag und Bekanntmachung des Hinweises auf die Patenterteilung: **16.11.2016**
(21) Anmeldenummer: 15165859.8
(22) Anmeldetag: 30.04.2015
(51) Int. Cl.: B65G 11/16

(54) **WANDUNG ZUR AUFNAHME VON SCHLEISSPLATTEN UND VERFAHREN ZUM WECHSELN VON SCHLEISSPLATTEN**
WALL FOR RECEIVING CLOSING PLATES AND METHOD FOR CHANGING CLOSING PLATES
PAROI DESTINÉE À LA RÉCEPTION DE PLAQUE D'USURE ET PROCÉDÉ DE CHANGEMENT DE PLAQUE D'USURE

(30) Priorität: 21.05.2014 DE 102014209697
(43) Veröffentlichungstag der Anmeldung: 25.11.2015
(73) Patentinhaber: Takraf GmbH, 04347 Leipzig (DE)
(72) Erfinder: Kahrger, Rainer, 04105 Leipzig (DE); Dr. Dilefeld, Mario, 04319 Leipzig (DE); Llanos, Carlos, 7790708 Ñuñoa (CL)
(74) Vertreter: Kailuweit & Uhlemann Patentanwälte Partnerschaft mbB

(56) Entgegenhaltungen:
- JP-A- S5 926 804
- JP-U- H0 665 316
- JP-U- S5 170 872
- US-B1- 6 591 995

## Beschreibung

Beim Umschlagen von Schüttgütern, insbesondere von grobkörnigen oder stückigen Schüttgütern, sind die mit diesen Schüttgütern in Kontakt stehenden Flächen der Maschinen einer besonders starken Reibungsbeanspruchung ausgesetzt. Diese Flächen werden daher häufig mit Schutzoberflächen, sogenannten Schleißplatten, gegen die Beanspruchung geschützt.

Gegenstand der vorliegenden Erfindung ist eine konstruktive Lösung für eine Wandung, die es ermöglicht, Schleißplatten, die die geschilderte starke abrasive Beanspruchung aufnehmen, sicher, kostengünstig und schnell wechseln zu können ohne den Innenraum der Schurren betreten zu müssen.

Aus dem Stand der Technik ist eine Vielzahl von Auskleidungen von abrasiv beanspruchten Schütt- oder Transportvorrichtungen bekannt.

So wird in der US 6,279,715 B1 ein Montagesystem für eine Schute offenbart, dass ein in der Schute auszubringendes Trägergerüst aufweist, in das einzelne Schutzpatten eingehängt werden. Dabei rasten Aussparungen in den seitlichen Kanten der Schleißplatten hinter Rastelementen ein. Die Schleißplatten können auch einzeln gewechselt werden. Dazu müssen sie jedoch mittels eines Montiereisens aus der Klemmverbindung herausgehebelt werden. Beim Einschütten von steinigem Gut können jedoch die Kanten und Rastelemente beschädigt werden, was einen leichten Wechsel unmöglich macht.

Die US 5,055,336 A schlägt vor, den Boden einer Schute mit hochkant stehenden Stahlbändern auszustatten, zwischen denen die Schleißplatten lösbar angeordnet sind. Die Platten werden dabei mit dem Boden der Schute verschraubt. Die Schrauben sind dabei in den Schleißplatten versenkt angeordnet und werden durch Einsätze, die die Schraubenköpfe schützen, abgedeckt. Es ist jedoch damit zu rechnen, dass die Abdeckung beim Einfüllen steiniger Güter beschädigt werden wird.

Allen genannten Druckschriften ist gemeinsam, dass die Schleißplatten auf Trägern angeordnet werden, von denen sie ohne weiteres abgelöst und ersetzt werden können. Es fällt jedoch auf, dass beim Wechseln der Schleißplatten der Innenraum der Schurren betreten werden muss, um die Schleißplatten an den Befestigungspunkt zu bringen, da die Befestigungselemente von der Schleißplattenseite her zu lösen sind. Da aufgrund des mechanischen Abriebs und der Verschmutzung diese Befestigungselemente sowohl schwer zugänglich als auch zerstört sein können, weisen alle ermittelten Lösungen ein gemeinsames Problem auf.

Eine Ausnahme stellt die US 7,232,023B2 dar. Hier werden die Schleißpatten an ihrer oberen Kante in eine mechanische Haltevorrichtung eingehangen. Darüber hinaus sind die Schleißplatten in der Art einer Schieferdeckung angeordnet, so dass die höher angeordnete Reihe von Platten die Aufhängungen der unter ihr angeordneten Reihe schützt, indem sie diese teilweise überlappt. Es ist jedoch nicht zu verkennen, dass diese Konstruktion lediglich für weniger große mechanische Belastungen geeignet ist, da sich eine Reihe von Hohlräumen unter den Schleißplatten ausbildet, wo diese nicht flächig auf der Trägerkonstruktion aufliegen. Darüber hinaus sind die Haltevorrichtungen trotz der Abdeckung durch eine darüber liegende Schleißplattenreihe gegen mechanische Belastungen anfällig, die zu einem Verbiegen der Haltevorrichtungen führen können.

Die JP S59 26804 A schlägt vor, die Schüttrinne einer Schute zur Übergabe von Fördergut von einem Transportband auf ein anderes mit Abstandsplatten auszustatten die das grobkörnige Schüttgut von der eigentlichen Wandung fernhalten. Die Wandung weist dazu Schlitze auf, durch die Abstandsplatten hochkant hindurchgeführt sind. Die Abstandsplatten sind derart beweglich angeordnet, dass sie bei Abnutzung mittels einer Mechanik nachgeschoben werden können, so dass stets ein Mindestabstand des Fördergutes zur Wandung gewährleistet ist. Nachteilig ist hier, dass feineres Fördergut oder Abrieb sich zwischen den herausragenden Abstandsplatten sammeln und deren Bewegung behindern kann. Darüber hinaus ist die Konstruktion sehr aufwendig. Da die Abstandsplatten auf gemeinsamen Trägern angeordnet sind und daher auch gemeinsam bewegt werden, kann nicht hinreichend auf unterschiedlich starken Abrieb der Abstandsplatten reagiert werden.

Gegenstand der US 3,883,080 A ist eine Schleißplattenanordnung, die als Auskleidung einer beanspruchten Oberfläche ausgeführt ist. Als Auskleidungsmaterial ist Gummi oder eine ähnliche Substanz vorgesehen. Die Auskleidung erfolgt abschnittsweise, wobei die Auskleidungsabschnitte von Bolzen mit einem Schneidgewinde gehalten werden. Das Schneidgewinde greift in das Auskleidungsmaterial ein. Das hervorstehende Ende des Bolzens wird durch die tragende Wandung hindurchgeführt und mit einer Mutter arretiert. Offenbar können die Auskleidungsabschnitte jedoch nicht gewechselt werden, ohne direkten Zugang zu der ausgekleideten Oberfläche zu haben.

Der Wechsel der Schleißplatten muss in allen Konstruktionsvarianten nach dem Stand der Technik von der Belastungsseite her erfolgen. Die Gefahr, die von dem möglichen Herabstürzen von Material aus einem höher gelegenen Vorratsbehälter im Moment des Plattenwechsels ausgeht, ist daher durch diese Konstruktionen nicht zu beseitigen.

Es stellt sich somit die Aufgabe, eine Wandung zur Aufnahme von Schleißplatten vorzuschlagen, die einen einfachen Wechsel der Schleißplatten ermöglicht. Häufig ist die Konstruktion der mit Schleißplatten ausgekleideten Bereiche so gestaltet, dass aus höher gelegenen Schurrenbereichen Vorratsbehältern oder von vorgeschalteten Bandanlagen Material, insbesondere Steine, herabstürzen können. Deshalb soll es möglich sein, den ausgekleideten Bereich nicht betreten zu müssen, um die Schleißplatten in Stand zu setzen bzw. zu wechseln. Weiterhin Aufgabe der Erfindung ist, ein Verfahren anzugeben, das einen einfachen und sicheren Wechsel der Schleißplatten ermöglicht.

Die erfindungsgemäße Wandung zur Montage der Schleißplatten wird in Anspruch 1 offenbart. Ein Verfahren zum Wechseln der Schleißplatten ist in Anspruch 5 dargestellt. Vorteilhafte Ausführungsformen der Wandung bzw. des Verfahrens sind in rückbezogenen Unteransprüchen offenbart.

Schleißplatten sind plattenförmige Gebilde, die auf einer Seite eine verschleißfeste, häufig keramische Schicht aufweisen. Die Schleißplatten finden beispielsweise in der Fördertechnik für Massengutumschlag Anwendung, insbesondere in Schurren. Häufig sind die Schleißplatten rechteckig und weisen auf ihrer Rückseite Befestigungsmittel auf. Die Befestigungsmittel sind dabei zumeist vier Gewindebolzen oder Gewindelöcher zur Aufnahme von Schrauben.

Die Befestigung der Schleißplatten erfolgt in der Regel durch Schraubverbindungen, es sind aber auch andere Befestigungsmetoden möglich. Hier sind bspw. Klemmkeile, Klammern oder Bolzen bevorzugt.

Die erfindungsgemäße Wandung zur Montage der Schleißplatten weist verschiedene Öffnungen auf. Diese Öffnungen dienen der Montage und der Halterung der Schleißplatten von der Außenseite. Das heißt, dass die Schleißplatten zur Montage durch die Wandung hindurchgeführt und dann befestigt werden. Optional können in der Wandung weitere Öffnungen vorgesehen sein, durch die beispielsweise festsitzende Schleißplatten mittels Schlageinwirkung zu lösen sind. Zur Montage der Schleißplatten ist als Öffnung in der Wandung ein Spalt vorgesehen, der sich an einer Kante der Position der zu montiertenden Schleißplatte erstreckt. Der Spalt entspricht in Breite und Höhe den Abmessungen der Kante der dort zu montierenden Schleißplatte. Zudem hat der Spalt eine Höhe, die es ermöglicht, die Schleißplatte im Spalt, parallel zu diesem, anzukippen. So wird das Einfädeln der Schleißplatte in der weiter unten erläuterten Weise ermöglicht. Die tatsächlich notwendige Höhe des Spalts lässt sich vom Fachmann aus einfachen geometrischen Berechnungen ermitteln. In rechtem Winkel vom Spalt erstrecken sich zwei Schlitze, die in Position und Abmessungen den Bolzen an der Rückseite der Schleißplatte entsprechen. Zur Halterung der Schleißplatte sind Öffnungen vorgesehen, durch die die Bolzen der Schleißplatte zur Rückseite der Wandung hindurchragen können. Es existieren dabei spaltferne Öffnungen, die lediglich den Abmessungen der Bolzen entsprechen (bzw. diese geringfügig übertreffen, um auch in Einführen mit geneigten Bolzen zu ermöglichen) sowie spaltnahe Öffnungen, die unter Umständen mit den Schlitzen identisch sein können bzw. mit dem Spalt durch einen offenen Übergang verbunden sind. Die für die entsprechenden Öffnungen vorgesehenen Befestigungsmittel (Bolzen) werden ebenfalls als spaltnah bzw. -fern bezeichnet.

Optional kann die Wandung mit Verstärkungsrippen bzw. einem Verstärkungsrippengitter versehen sein, um die notwendige mechanische Steifigkeit zu erreichen.

Prinzipiell kann praktisch jede konventionelle Schleißplatte eingesetzt werden. Der erfindungsgemäße Schleißplattenwechsel erlaubt den Einsatz von größeren und damit schwereren Schleißplatten, was den Wechsel weiter vereinfacht, da weniger Teile zu handhaben sind. Die Schleißplatten weisen bevorzugt eine rechteckige oder quadratische Form auf. Sie liegen vorzugsweise unmittelbar zueinander benachbart auf der Wandung auf und bilden so eine vollständig oder weitgehend geschlossene Schutzoberfläche aus. Die Schleißplatten können auch andere Formen als eine rechteckige (bspw. sechseckige) aufweisen. Vorzugsweise werden sie in der Art eines Mosaiks oder einer Kachelfläche vollflächig im zu schützenden Bereich der Wandung vorgesehen. Der Abstand zwischen den Schleißplatten ist unter Berücksichtigung der konstruktiven Gegebenheiten zu minimieren. Die Kantenlängen der Schleißplatten sind vorzugsweise so gewählt, dass maximale Schurrenflächen abgedeckt werden und gleichzeitig ein manuelles Handhaben der Schleißplatten bei deren Wechsel möglich ist. In einer bevorzugten Ausführungsform sind die Schleißplatten quadratisch oder rechteckig. Sie sind dabei bevorzugt in vertikalen Reihen angeordnet, wobei die Schleißplatten benachbarter Reihen gegeneinander versetzt sind. Der Versatz beträgt vorzugsweise die Hälfte bis zwei Drittel der Höhe einer montierten Schleißpatte (gemessen von der Unterkante der montierten Schleißplatte). Da die Wandung für jede Schleißplatte einen Spalt in der gesamten Breite der Schleißplatte aufweist, wird durch diesen Versatz vermieden, dass die Spalte für die Montage nebeneinanderliegender Reihen von Schleißplatten ebenfalls nebeneinander liegen. Dies würde eine starke strukturelle Schwächung der Wandung bedeuten, was durch den dargestellten Versatz vermieden werden kann.

Eine andere bevorzugte Ausführungsform der Anordnung von quadratischen Schleißplatten sieht vor, dass die Spalte zur Montage der Schleißplatten verschieden positioniert werden. Dabei wird die Positionen der Spalte bei benachbarten Schleißplatten verändert. So weist eine Schleißplattenaufnahme den Spalt an der Unterseite der Montageposition, die links benachbarte den Spalt an der linken Kante, die rechts benachbarte diesen Spalt ebenfalls an der linken Kante und die darüber angeordnete Schleißplattenaufnahme den Spalt zur Montage bspw, an der oberen Kante auf. Die Positionen der Spalte zur Montage können derart variiert werden, dass zwischen benachbarten Schleißplatten möglichst viel Wandmaterial ohne Durchbrüche erhalten bleibt. So wird vorteilhaft die Stabilität und Festigkeit der Wandung erhöht.

Bei den Befestigungsmitteln an der Rückseite der Schleißplatten handelt es sich vorzugsweise um vier Bolzen, besonders bevorzugt Gewindebolzen, die senkrecht aus der Rückseite hervorgehen und in den Ecken bzw. der Nähe der Ecke, bevorzugt symmetrisch angeordnet sind. Die Gewindebolzen bestehen bevorzugt aus demselben Material wie die Schleißplatte. Es sind jedoch auch andere, mit dieser verträgliche Materialien (keine Bildung von Korrosionspunkten, verbindungsfähig) möglich. Die tatsächlichen Abmessungen der Schleißplatten, ihre Dicke und die Abmessungen der Bolzen richten sich nach den spezifischen Anforderungen und dem Kundenwunsch und können angepasst werden.

Das erfindungsgemäße Verfahren zur Montage von Schleißplatten an einer zuvor beschriebenen erfindungsgemäßen Wandung hat folgende Verfahrensschritte.

In einem ersten Schritt a) erfolgt die Montage einer oder mehrerer Einführhilfen an einem oder mehreren spaltnahen Befestigunsgelementen nachdem die Befestigusmuttern hier entfernt worden . In einer einfachen Ausgestaltung werden hierzu Verlagerungen auf die an der Schleißplatte befindlichen Gewindebolzen zur Befestigung aufgeschraubt. Dabei sind spaltnahe Befestigungselemente, die, die im montierten Zustand der Schleißplatte im Spalt oder einem der Schlitze angeordnet sind.

Im darauf folgenden Schritt b) erfolgt das Einführen der Schleißplatte in den Spalt, soweit, bis die Befestigunsgelemente, die nicht spaltnah sind, die Schlitze passiert haben. Das Einführen erfolgt also mit den Befestigungselementen zuerst, die keine Einführhilfen aufweisen.

Anschließend erfolgt im Schritt c) das Ankippen der Schleißplatte im Spalt, derart, dass die spaltnahen Befestigunsgelemente in die Schlitze eintreten und die Schleißplatte vollständig durch die Wandung geführt werden kann. Die spaltfernen Befestigungselemente werden somit zu ihren Befestigungspunkten in der Wandung geführt.

Im Schritt d) erfolgt dann das Einführen der Befestigungselemente, die nicht spaltnah sind, in die dafür vorgesehenen Öffnungen der Wandung.

In einem abschließenden Schritt e) erfolgt das Arretieren der Befestigunsgelemente, die nicht spaltnah sind in den Öffnungen und Lösen der Einführhilfen von den spaltnahen Befestigungselementen. Bevorzugt sind als Befestigungselemente Gewindebolzen und das Arretieren erfolgt bevorzugt mittels aufzuschraubenden Muttern.

Im anschließenden, optionalen Schritt f) werden die spaltnahen Befestigungselemente ebenfalls arretiert.

Die Arretierung der Befestigungselemente in den Schritten e) und f) erfolgt bevorzugt durch Befestigung von Muttern auf Gewindebolzen. Besonders bevorzugt werden zusätzlich Unterlegscheiben verwendet, um eine gute Auflage der Muttern zu gewährleisten. Insbesondere bei der Befestigung der spaltnahen Befestigungselemente sind Unterlegscheiben, die die Spalt- und Schlitzbreite überdecken, vorteilhaft.

Bei der Montage der Schleißplatten werden diese angekippt, bevorzugt, bis sie mindestens annähernd einen rechten Winkel zur Wandung bilden. Danach werden Sie zum größten Teil durch den Spalt in der Wandung und durch diese hindurch geführt. Die Bolzen auf der Rückseite der Schleißplatte passieren dabei die Schlitze. Mit einem leichten Ankippen der Schleißplatte, in einen spitzen Winkel zur Wandung, wird diese vollständig in den Spalt eingeführt. Nunmehr wird die Schleißplatte von der Außenseite der Wandung an den spaltnächsten Bolzen gehalten, während die spaltfernen Bolzen in die dafür vorgesehenen Öffnungen eingeführt werden. Die Schleißplatte wird dann vollständig in Montageposition gekippt und von der Außenseite der Wandung her in ihrer Position befestigt.

In einer besonders bevorzugten Ausführungsform werden auf einer oder mehreren der spaltnächsten Bolzen Einführhilfen befestigt. Hierbei handelt es sich bevorzugt um Verlängerungen der Bolzen, die auf diesen aufgeschraubt oder anderweitig lösbar befestigt sind. Nach dem Einführen der spaltfernen Bolzen in die dafür vorgesehenen Öffnungen können die Einführhilfen entfernt werden. Die Einführhilfen dienen als Montagehilfen und können in ihrer Form dementsprechend angepasst sein. In einer besonders einfachen Ausführungsform handelt es sich um einfache aufgeschraubte Stangen. Fortgeschrittene Ausführungsformen sehen gekrümmte und mit Handhabungshilfen (bspw. Handgriffen) versehene Einführhilfen vor.

Die erfindungsgemäße Wandung ermöglicht erstmalig, die Schleißplatten an der Innenseite der Wandung von der Außenseite der Wandung zu wechseln. Das Personal muss sich somit nicht in die Vorrichtung begeben und ist vor herabstürzendem Schüttgut geschützt.

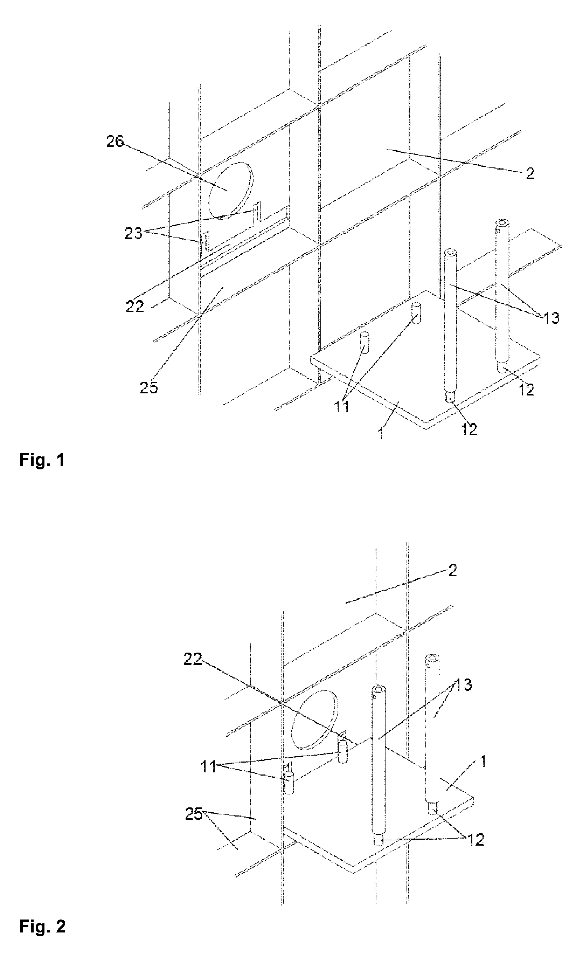

Nachfolgend wird ein Ausführungsbeispiel der Erfindung anhand von Figuren erläutert:
Die Figuren Fig. 1 bis Fig. 4 zeigen die Montage der erfindungsgemäßen Schleißplatte (1) in der Wandung (2) in verschiedenen Stufen des Fortschrittes.

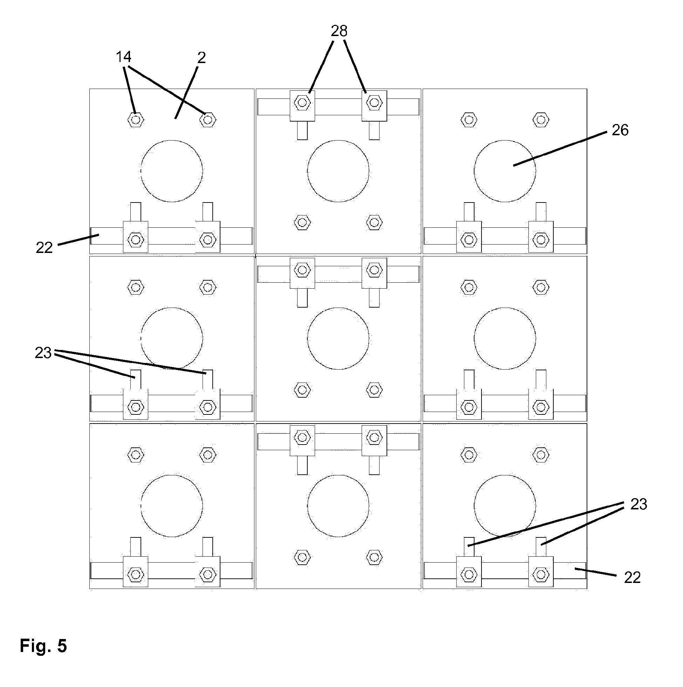

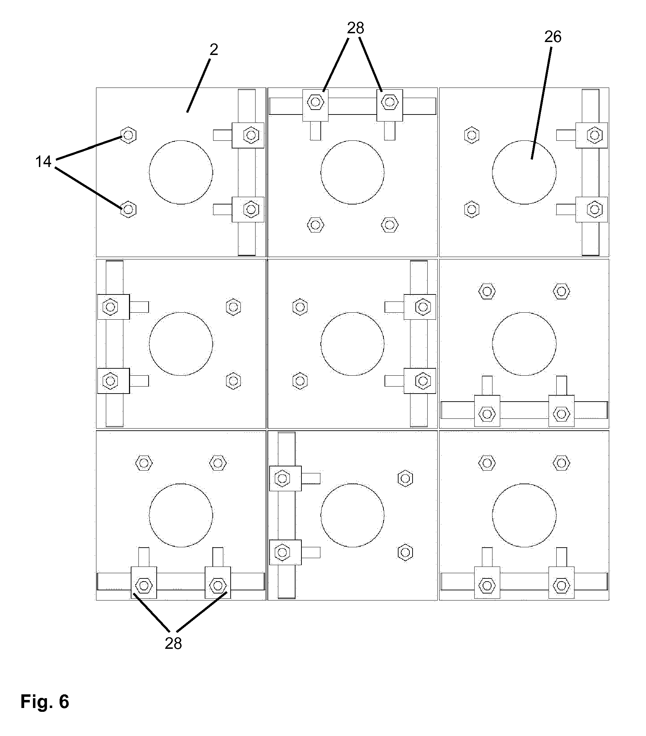

Die Figuren Fig. 5 und Fig. 6 zeigen verschiedene Möglichkeiten, die Spalte (22) zur Montage in der Wandung (2) so anzuordnen, dass sich keine langen Reihen von Spalten (2) ausbilden, die eine strukturelle Schwächung der Wand (2) zur Folge hätten.

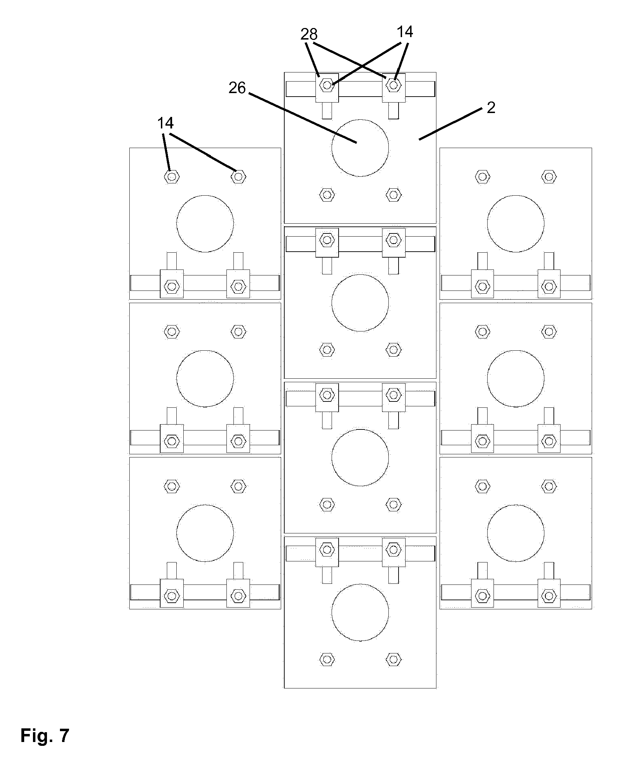

Fig. 7 zeigt schematisch, wie durch den Versatz um etwa eine halbe Länge der Schleißplatten (1) und die umgekehrte Anordnung der Schleißplatten (1) in der mittleren Reihe, das Nebeneinanderliegen von Spalten (22) vorteilhaft vermieden werden kann, so dass die Stabilität der Wandung (2) erhalten bleibt.

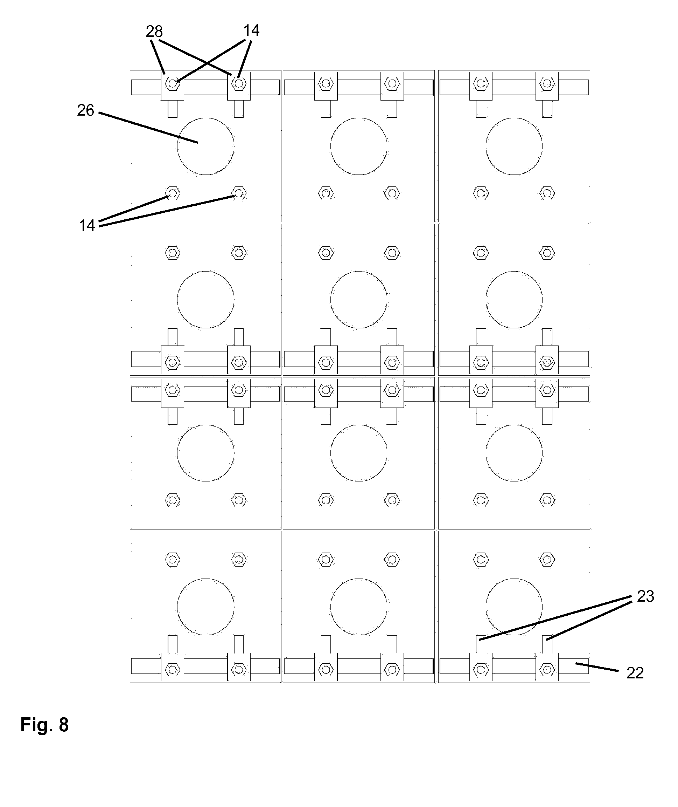

Fig. 8 zeigt eine homogene Anordnung der Schleißplatten (1), wobei im mittleren Bereich der benachbart liegenden Spalten (22) ein Verstärkungselement angeordnet ist, das die lokale Schwächung der Wandung (2) in diesem Bereich ausgleicht.

### Ausführungsbeispiel

In Fig. 1 ist eine Schleißplatte (1) dargestellt. Die Schleißplatte (1) ist quadratisch (Kantenlänge 30 cm) In Fig. 2 wird die Schleißplatte horizontal angekippt und mit den spaltfernen Befestigungselementen (11) voran, in den Spalt (22) eingeführt. Die spaltfernen Befestigungselemente (11) passieren dabei die dafür vorgesehenen Schlitze (23).

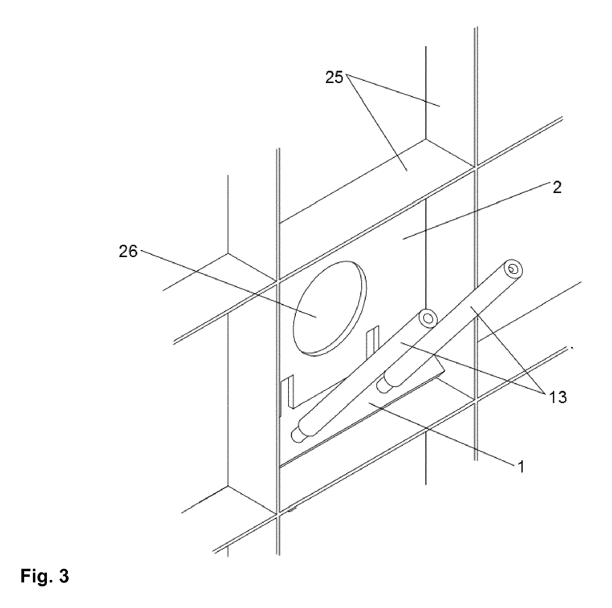

In Fig. 3 haben die spaltfernen Befestigungselemente (11) bereits die Schlitze (23) passiert und die Schleißplatte (1) wird nunmehr im Spalt (22) angekippt und unter Nutzung der Einführhilfen (13), die weiter durch den Spalt (22) geführt, wobei im späteren Verlauf die spaltnahen Befestigungselemente (12) in die Schlitze (22) und die spaltfernen Befestigungselemente (11) in die Öffnungen zur Aufnahme der spaltfernen Befestigungselemente, hier nicht dargestellt) eingeführt werden. Mittig zur Befestigungsposition der Schleißplatten (1) ist eine weitere runde Öffnung (26) vorgesehen, durch die eine festsitzende Schleißplatte (1) mittels Hammerschlägen lösbar ist. Zudem ermöglicht die Öffnung (26) die Dickenmessung der Schleißplatten (1) im eingebauten Zustand und somit eine Feststellung des Verschleißzustandes.

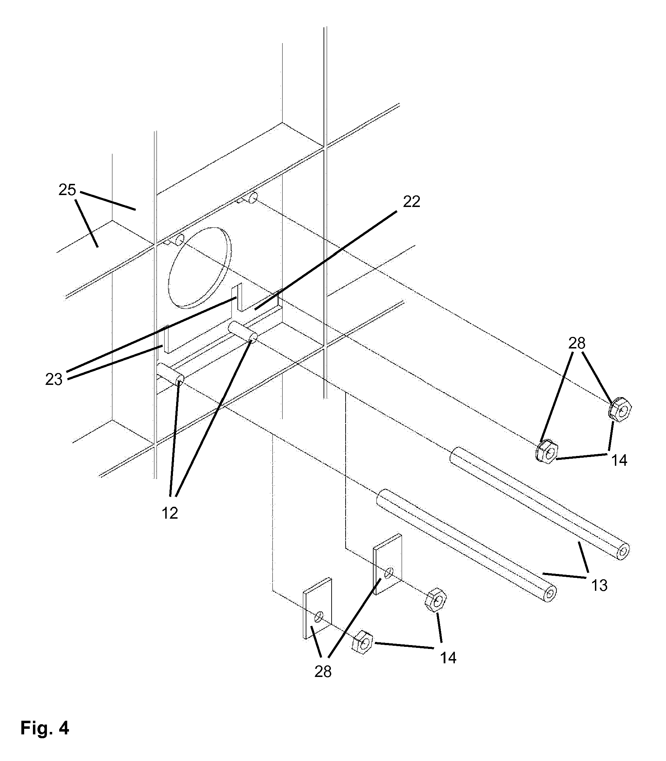

In Fig. 4 hat die Schleißplatte (1) ihre Montageposition erreicht. Die spaltfernen Befestigungselemente (11) werden in den Öffnungen zur Aufnahme der spaltfernen Befestigungselemente mittels der Muttern (14) und Unterlegscheiben (28) arretiert. Die Einführhilfen (13) werden von den spaltnahen Befestigungselementen (12) abgeschraubt. Die Unterlegscheiben (28) im Bereich von Schlitz (23) und Spalt (22) sind dabei großflächig ausgeführt, um Spalt (22) und Schlitz (23) zu überdecken und sicheren Halt zu gewährleisten.

### Bezugszeichen

- 1: Schleißplatte
- 11: spaltferne Befestigungselemente
- 12: spaltnahe Befestigungselemente
- 13: Einführhilfen
- 14: Muttern zur Befestigung der Schleißplatte an der Schurrenrückwand
- 2: Wandung
- 22: Spalt
- 23: Schlitz
- 25: Versteifungsrippe der Wandung
- 26: Öffnung
- 28: Unterlegscheibe

## Patentansprüche

1. Wandung (2) aufweisend eine oder mehrere Schleißplatten (1), wobei diese Wandung (2) Öffnungen zur Aufnahme wenigstens einiger der Befestigunsgelemente (11, 12) der Schleißplatten (1) aufweist, **dadurch gekennzeichnet, dass** diese weiterhin Spalte (22) aufweist, die in ihren Abmessungen der Breite und Dicke der Schleißplatten (1) entsprechen und die Spalte (22) höher als die Dicke der Schleißplatten (1) sind, so dass ein zum Einfädeln der Schleißplatten (1) ausreichendes Ankippen der Schleißplatten (1) in den Spalten (22) möglich ist, wobei von den Spalten (22) mit den Befestigungselementen (11, 12) der Schleißplatten (1) korrespondiernde Schlitze (23) abgehen, durch die die Befestigunsgelemente (11, 12) der Schleißplatten (1) die Wandung (2) passieren können.

2. Wandung (2) nach Anspruch 1, aufweisend mehrere Schleißplatten (1), **dadurch gekennzeichnet, dass** die Spalte (22) zur Montage horizontal oder vertikal benachbarter Schleißplatten (1) nicht unmittelbar benachbart zueinander angeordnet sind.

3. Wandung (2) nach einem der vorangehenden Ansprüche, **dadurch gekennzeichnet, dass** die Wandung (2) weitere Öffnungen (26) weitestgehend mittig zur Position der befestigten Schleißplatte (1) aufweist.

4. Wandung (2) nach einem der vorangehenden Ansprüche, **dadurch gekennzeichnet, dass** die Wandung (2) Verstärkungsrippen oder ein Verstärkungsrippengitter aufweist.

5. Verfahren zur Montage von Schleißplatten (1) an einer Wandung (2) nach einem der Ansprüche 1 bis 4 **gekennzeichnet durch** die Schritte:
a. Montage einer oder mehrerer Einführhilfen (13) an einem oder mehreren spaltnahen Befestigunsgelementen (12), wobei spaltnah Befestigungselemente (12) sind, die im montierten Zustand der Schleißplatte (1) im Spalt (22) oder einem der Schlitze (23) angeordnet sind,
b. Einführen der Schleißplatte (1) in den Spalt (22), bis die Befestigunsgelemente (11) die nicht spaltnah sind, die Schlitze (23) passiert haben,
c. Ankippen der Schleißplatte (1) im Spalt (22), derart, dass die spaltnahen Befestigunsgelemente (12) in die Schlitze (23) eintreten und die Schleißplatte (1) vollständig **durch** die Wandung (2) geführt werden kann,
d. Einführen der Befestigungselemente (11), die nicht spaltnah sind in die dafür vorgesehenen Öffnungen der Wandung,
e. Arretieren der Befestigunsgelemente (11), die nicht spaltnah sind in den Öffnungen und Lösen der Einführhilfen (13) von den spaltnahen Befestigungselementen (12).

6. Verfahren nach Anspruch 5, **dadurch gekennzeichnet, dass** nach dem Lösen der Einführhilfen (13) von den spaltnahen Befestigungselementen (12) diese ebenfalls arretiert werden.

## Claims

1. A wall (2), having one or more wear plates (1), said wall (2) having openings for receiving at least some of the fastening elements (11, 12) of the wear plates (1), **characterised in that** said wall also has gaps (22), which correspond in their dimensions to the width and thickness of the wear plates (1), and the gaps (22) are higher than the thickness of the wear plates (1), so that it is possible to tilt the wear plates (1) into the gaps (22) sufficiently to feed in the wear plates (1), wherein slots (23) that correspond with the fastening elements (11, 12) of the wear plates (1) emanate from the gaps (22), through which slots the fastening elements (11, 12) of the wear plates (1) can pass through the wall (2).

2. The wall (2) according to claim 1, having several wear plates (1), **characterised in that** the gaps (22) for assembly of horizontally or vertically adjacent wear plates (1) are not arranged directly adjacent to each other.

3. The wall (2) according to any one of the preceding claims, **characterised in that** the wall (2) has further openings (26) largely centered to the position of the fastened wear plate (1).

4. The wall (2) according to any one of the preceding claims, **characterised in that** the wall (2) has reinforcing ribs or a reinforcing rib grid.

5. A method for mounting wear plates (1) on a wall (2) according to one of claims 1 to 4, **characterised by** the steps:
a. mounting one or more insertion aids (13) on one or more fastening elements (12) close to the gap, wherein fastening elements (12) close to the gap are those that are arranged in the gap (22) or in one of the slots (23) when the wear plate (1) is mounted,
b. inserting the wear plate (1) into the gap (22) until the fastening elements (11) that are not close to the gap have passed through the slots (23) ,
c. tilting the wear plate (1) in the gap (22) in such a manner that the fastening elements (12) close to the gap enter the slots (23) and the wear plate (1) can be guided completely through the wall (2),
d. inserting the fastening elements (11) that are not close to the gap into the openings provided therefor in the wall,
e. locking the fastening elements (11) that are not close to the gap in the openings and untightening the insertion aids (13) from the fastening elements (12) close to the gap.

6. The method according to claim 5, **characterised in that** after the insertion aids (13) have been untightened from the fastening elements (12) close to the gap, the latter are likewise locked.

## Revendications

1. Paroi (2) comportant un ou plusieurs panneaux d'usure (1), ladite paroi (2) comportant des ouvertures destinées à recevoir au moins quelques-uns des éléments de fixation (11, 12) des panneaux d'usure (1), **caractérisée en ce qu'**elle comporte par ailleurs des interstices (22) qui par leurs dimensions correspondent à la largeur et à l'épaisseur des panneaux d'usure (1) et les interstices (22) sont plus hauts que l'épaisseur des panneaux d'usure (1), de sorte à permettre un basculement suffisant des panneaux d'usure (1) dans les interstices (22), pour enfiler les panneaux d'usure (1), des entailles (23) correspondant avec les éléments de fixation (11, 12) des panneaux d'usure (1), à travers lesquelles les éléments de fixation (11, 12) des panneaux d'usure (1) peuvent passer la paroi (2) partant des interstices (22).

2. Paroi (2) selon la revendication 1, comportant plusieurs panneaux d'usure (1), **caractérisée en ce que** pour le montage de panneaux d'usure (1) voisins à l'horizontale ou à la verticale, les interstices (22) ne sont pas placés en étant directement voisins les uns avec les autres.

3. Paroi (2) selon l'une quelconque des revendications précédentes, **caractérisée en ce que** la paroi (2) comporte d'autres ouvertures (26) le plus largement centrées par rapport à la position du panneau d'usure (1) fixé.

4. Paroi (2) selon l'une quelconque des revendications précédentes, **caractérisée en ce que** la paroi (2) comporte des nervures de renfort ou un treillis de nervures de renfort.

5. Procédé destiné au montage de panneaux d'usure (1) sur une paroi (2) selon l'une quelconque des revendications 1 à 4, **caractérisé par** les étapes :
a. du montage d'un ou de plusieurs auxiliaires d'insertion (13) sur un ou sur plusieurs éléments de fixation (12) proche(s) d'un interstice, à proximité d'un interstice se trouvant des éléments de fixation (12) qui en position montée du panneau d'usure (1) sont placés dans l'interstice (22) ou l'une des entailles (23),
b. de l'insertion du panneau d'usure (1) dans l'interstice (22), jusqu'à ce que les éléments de fixation (11) qui ne sont pas proches d'un interstice aient passé les entailles (23),
c. du basculement du panneau d'usure (1) dans l'interstice (22), de telle sorte que les éléments de fixation (12) proches d'un interstice pénètrent dans les entailles (23) et le panneau d'usure (1) puisse être guidé totalement à travers la paroi (2),
d. de l'insertion des éléments de fixation (11) qui ne sont pas proches d'un interstice dans l'ouverture prévue à cet effet dans la paroi,
e. du blocage dans les ouvertures des éléments de fixation (11) qui ne sont pas proches d'un interstice et du détachement des auxiliaires d'insertion (13) des éléments de fixation (12) proches d'un interstice.

6. Procédé selon la revendication 5, **caractérisé en ce qu'**après le détachement des auxiliaires d'insertion (13) des éléments de fixation (12) proches d'un interstice, on bloque également ces derniers.
